# EUROPÄISCHE PATENTSCHRIFT

(11) **EP 2 225 307 B1**
(45) Veröffentlichungstag und Bekanntmachung des Hinweises auf die Patenterteilung: **21.11.2012**
(21) Anmeldenummer: 08861704.8
(22) Anmeldetag: 16.12.2008
(51) Int. Cl.: C08G 65/00, C08G 65/30

(54) **VERFAHREN ZUR HERSTELLUNG VON POLYETHERALKOHOLEN**
METHOD FOR PRODUCING POLYETHER ALCOHOLS
PROCÉDÉ DE PRODUCTION DE POLYÉTHER-ALCOOLS

(30) Priorität: 19.12.2007 EP 07150105
(43) Veröffentlichungstag der Anmeldung: 08.09.2010
(73) Patentinhaber: BASF SE, 67056 Ludwigshafen (DE)
(72) Erfinder: LÖFFLER, Achim, 67346 Speyer (DE); SCHAUSS, Eckard, 67259 Heuchelheim (DE); SCHOPOHL, Matthias, 01127 Dresden (DE); MECKELNBURG, Dirk, 67117 Limburgerhof (DE)
(86) Internationale Anmeldenummer: PCT/EP2008/067588
(87) Internationale Veröffentlichungsnummer: WO 2009/077517

(56) Entgegenhaltungen:
- EP-A- 0 419 275
- WO-A-01/36513
- WO-A-2006/106122
- DE-A1- 10 237 910
- DE-B- 1 285 741
- FALBE, REGITZ: "RÖMPP CHEMIE LEXIKON" 1991, GEORG THIEME VERLAG , STUTTGART, NEW YORK, 9. AUFLAGE , XP002526171 Seite 3231 Begriff "Paste"

## Beschreibung

Gegenstand der Erfindung ist ein Verfahren zur Herstellung von Polyetheralkoholen durch Umsetzung von Alkylenoxiden mit H-funktionellen Startsubstanzen.

Polyetheralkohole werden in großen Mengen hergestellt und vielseitig verwendet. Ihre Herstellung erfolgt zumeist durch Anlagerung von Alkylenoxiden an H-funktionelle Startsubstanzen. Die Anlagerung erfolgt üblicherweise in Anwesenheit von Katalysatoren, insbesondere basischen Verbindungen, wie Aminen oder Alkalihydroxiden, oder von Multimetallcyanidverbindungen, auch als DMC-Katalysatoren bezeichnet.

Haupteinsatzgebiet der Polyetheralkohole ist die Herstellung von Polyurethanen. Je nach den Anforderungen an die Eigenschaften der Polyurethane können sich die Polyetheralkohole in ihrer Funktionalität, dem Molgewicht und den eingesetzten Startsubstanzen stark unterscheiden.

Derzeit werden mit Metallhydroxiden katalysierte Polyetheralkohole überwiegend in Batch- oder Semibatch-Fahrweise hergestellte. Eine Ausnahme bilden die DMCkatalysierte Polyetherole. Da diese Katalysatoren das Wachstum kurzer Ketten gegenüber längeren Ketten begünstigen, können Polyetheralkohole auch nach einem kontinuierlichen Verfahren hergestellt werden. Hierbei werden in einen kontinuierlichen Reaktor, beispielsweise einen kontinuierlichen Rührkessel oder einen Rohrreaktor, kontinuierlich Startsubstanz und Alkylenoxide dosiert und das Fertigprodukt kontinuierlich entnommen. Derartige Verfahren sind beispielsweise in WO 98/03571 oder in DD 204 735 beschrieben. Diese Verfahren sind auf DMC-Katalysatoren beschränkt. Nach der DMC-Fahrweise können jedoch nur Polyetheralkohole unter Verwendung von flüssigen Startsubstanzen hergestellt werden, wie sie üblicherweise zur Herstellung von Polyurethan-Weichschaumstoffen eingesetzt werden. Die Anlagerung von Alkylenoxiden an feste Startsubstanzen oder an aromatische Amine, wie sie als Startsubstanzen zur Herstellung von Polyetheralkoholen für die Anwendung in Polyurethan-Hartschaumstoffen eingesetzt werden, ist mit DMC-Katalysatoren nicht möglich.

Es wäre wünschenswert, ein gegenüber dem derzeit üblichen Semibatch-Verfahren verbessertes Verfahren zur Herstellung von Hartschaum-Polyetheralkoholen zu finden. Die bei dieser Verfahrensweise notwendigen relativ großen Reaktoren in Folge der langen Rüst- und Entleerzeiten bestimmen maßgeblich die Investitionskosten der Produktionsanlagen. Weiterhin werden Ventile, Pumpen und Motoren aufgrund der wechselnden Belastungen stark beansprucht. Gerade bei der Herstellung von Polyolen auf Basis von Zucker sind zudem starke Motoren, Getriebe und Rührerachsen notwendig, um die Zuckermischung intensiv mit den Alkylenoxiden mischen zu können. Die Semibatch-Fahrweise kann zudem von Charge zu Charge Schwankungen in der Produktqualität bewirken.

Auch während der Alkoxylierung zeigt die Semibatch-Fahrweise Nachteile. Meist wird der Zucker mit einem Co-Starter, wie Glyzerin, Diethylenglykol, Triethanolamin, Dipropylenglykol oder Wasser zu einer Mischung beziehungsweise Suspension vermischt. Anschließend wird das Alkylenoxid zudosiert. Insbesondere zu Beginn des Prozesses ist allerdings das Alkylenoxid praktisch unlöslich in der Zucker- Mischung/Suspension. Daher treten anfangs hohe Drücke im Reaktor auf, so dass unter Umständen die Dosierung des Alkylenoxids abgestellt werden muss. Weiterhin werden unterschiedliche Alkoxylierungsgrade beobachtet.

Die Umstellung dieser Fahrweise auf eine kosteneffizientere kontinuierliche Fahrweise ist nicht direkt möglich. Da es sich bei der alkalisch katalysierten Propoxylierung um eine quasi-lebende Polymerisation handelt, ist die direkte Umstellung der Semibatch Alkoxylierung im rückvermischten Reaktor auf eine kontinuierliche Fahrweise, wie dies zum Beispiel im Falle der DMC-Katalyse möglich und in US 5698012 beschrieben ist, nicht möglich. Vielmehr werden in diesem Fall breite Molekulargewichtsverteilungen beobachtet

In WO 00136514, WO 00136088 und WO 00136513 werden Rohrreaktoren beschrieben, die auch zur Herstellung von Hartschaumpolyetheralkoholen verwendet werden können. Um hier eine vollständige Umsetzung zu erreichen, müssen die Rohrreaktoren sehr lang ausgelegt werden.

Die Verwendung von Strömungsrohrreaktoren würde zwar zu schmalen Molekulargewichtsverteilungen führen, allerdings kann die Mischung beziehungsweise Suspension aus Zucker und Costarter sofern überhaupt, nur sehr aufwändig durch die Rohrleitungen gepumpt werden. Die Probleme der Nicht-Mischbarkeit von Alkylenoxid- und Zuckerphase und, in der Folge, die geringe Reaktionsgeschwindigkeiten aufgrund niedriger Konzentration bleiben zudem bestehen. Weiterhin sind zahlreiche Dosierstellen notwendig, um den Reaktor sicher betreiben und die Reaktionstemperatur kontrollieren zu können.

Ein besonderes Problem ist die Dosierung der festen Startsubstanz. Prinzipiell ist es schwierig, feste Verbindungen in kontinuierlichen Verfahren zu dosieren, wobei bei der Herstellung von Polyetheralkoholen noch dazu kommt, dass die Umsetzung unter erhöhtem Druck abläuft. Weiterhin neigt insbesondere Saccharose zur Verklumpung, was zur Verstopfung der Zuleitungen führen kann. Die häufig als Startsubstanz eingesetzte Saccharose ist sehr abrasiv, was zu einem hohen Verschleiß bei den Reaktionsvorrichtungen führt. Diese Probleme können auch durch Mischung mit anderen mit Alkylenoxiden reaktiven Startern, beispielsweise Glycerin, nur unzureichend gelöst werden. So ist die Höchstmenge für den Zusatz an derartigen, bei Raumtemperatur flüssigen Verbindungen limitiert, um die Funktionalität der Polyetheralkohole nicht zu stark absinken zu lassen.

Es war daher die Aufgabe der vorliegenden Erfindung, ein vorzugsweise kontinuierliches Verfahren zur Herstellung von Polyetheralkoholen durch Umsetzung von bei Raumtemperatur festen Startsubstanzen mit Alkylenoxiden zu entwickeln, das zu Produkten mit einer engen Molgewichtsverteilung führt, das einfach und betriebssicher betrieben werden kann und bei dem die Startsubstanzen problemlos kontinuierlich dosiert werden können.

Die Aufgabe konnte überraschenderweise gelöst werden, indem aus den bei Raumtemperatur festen Startsubstanzen eine Paste hergestellt und diese Paste dem Reaktionsgefäß kontinuierlich zugeführt wird.

Gegenstand der Erfindung ist ein Verfahren gemäß Anspruch 1 zur Herstellung von Polyetheralkoholen durch Anlagerung von Alkylenoxiden an H-funktionelle Startsubstanzen, das heißt mit Alkylenoxiden reaktive Wasserstoffatome enthaltende Verbindungen, von denen mindestens eine bei Raumtemperatur fest ist, in einem Reaktionsgefäß, wobei die Ausgangskomponenten dem Reaktionsgefäß kontinuierlich zugeführt werden, dadurch gekennzeichnet, dass aus der festen Startsubstanz eine Paste hergestellt und diese Paste dem Reaktionsgefäß kontinuierlich zugeführt wird.

Beschrieben werden Mischungen, bestehend aus mindestens einer bei Raumtemperatur festen, H-funktionellen, das heißt mit Alkylenoxiden reaktive Wasserstoffatome enthaltenden Verbindung und mindestens einer bei Raumtemperatur flüssigen, mit Alkylenoxiden reaktive Wasserstoffatome enthaltenden Verbindung, dadurch gekennzeichnet, dass sie in Form einer Paste vorliegen.

In einer bevorzugten Ausführungsform wird das Verfahren kontinuierlich durchgeführt, das heißt, dass die Ausgangskomponenten dem Reaktionsgefäß, bei dem es sich um einen kontinuierlich arbeitenden Reaktor handelt, kontinuierlich zugeführt und das Endprodukt dem Reaktionsgefäß kontinuierlich entnommen werden.

Im Reaktionsgefäß stellt sich bei der kontinuierlichen Durchführung des Verfahrens ein stationärer Zustand ein.

Als Paste im Sinne der Erfindung gelten Gemische aus bei Raumtemperatur festen Verbindungen mit bei Raumtemperatur flüssigen Verbindungen, die jeweils mit Alkylenoxiden reaktive Wasserstoffatome enthalten. Die bei Raumtemperatur festen Verbindungen liegen dabei in Form von Partikeln mit einer durchschnittlichen Partikelgröße von kleiner 2 mm vor. Diese Gemische sind pumpfähig.

Unter pumpfähig im Sinne der vorliegenden Erfindung wird verstanden, dass die Viskosität der Paste bei maximal 100000 mPa.s, vorzugsweise 40000 mPa.s liegt. Eine solche Viskosität kann bereits bei Raumtemperatur erreicht werden. Falls dies nicht der Fall ist, kann die Viskosität durch Erhöhung der Temperatur eingestellt werden. Die Bestimmung der Viskosität erfolgt hierbei nach DIN 53019.

Die Paste wird durch Mischen der bei Raumtemperatur festen Startsubstanz mit einer bei Raumtemperatur flüssigen Verbindung hergestellt.

Als bei Raumtemperatur feste Startsubstanzen können prinzipiell alle Verbindungen eingesetzt werden, die gegenüber Alkylenoxiden reaktive Wasserstoffatome, im folgenden einfach auch als aktive Wasserstoffatome bezeichnet, besitzen. Vorzugsweise handelt es sich um feste Verbindungen mit Aminogruppen und/oder Hydroxylgruppen. Ihre Funktionalität ist vorzugsweise mindestens 4.

Unter den Hydroxylgruppen enthaltenden festen Startsubstanzen mit einer Funktionalität von mindestens 4 haben Kohlenhydrate die größte Bedeutung. Vorzugsweise sind die Kohlenhydrate ausgewählt aus der Gruppe, enthaltend Pentaerithrit, Sorbit, Saccharose, Cellulose, Stärke, Stärkehydrolysate wobei Saccharose, auch als Sucrose bezeichnet, und Sorbit die größte technische Bedeutung haben.

Eine weitere bevorzugte Gruppe von bei Raumtemperatur festen H-funktionellen Verbindungen sind solche, die mindestens ein Stickstoffatom im Molekül enthalten. Insbesondere enthalten diese Verbindungen mindestens eine primäre oder sekundäre Aminogruppe.

Bei den festen Startsubstanzen mit Aminogruppen handelt es sich bevorzugt um aliphatische und aromatische Amine.

Die als feste Startsubstanz eingesetzte mindestens ein Stickstoffatom enthaltende Verbindung ist bevorzugt ausgewählt aus der Gruppe, enthaltend Toluylendiamin (TDA), Diphenylmethandiamin (MDA), Harnstoff, Melamin und dessen H-funktionelle Derivate sowie Umsetzungsprodukte von Aminen mit Isocyanaten wie TDI oder MDI. Bei TDA sind die vicinalen Isomere bevorzugt.

Die größte technische Bedeutung haben hierbei das Toluylendiamin (TDA) und Melamin sowie dessen H-funktionelle Derivate.

Die festen Startsubstanzen können einzeln oder in beliebigen Mischungen untereinander eingesetzt werden.

Wie beschrieben, wird die Paste durch Mischung der bei Raumtemperatur festen Startsubstanz mit Verbindungen, die bei Raumtemperatur flüssig sind, hergestellt. Bei den bei Raumtemperatur flüssigen Verbindungen handelt es sich um Verbindungen mit aktiven (auch als Co-Starter bezeichnet) Wasserstoffatomen.

Bei den bei Raumtemperatur flüssigen Verbindungen,das heißt mit Alkylenoxiden reaktiven, kann es sich um niedermolekulare Verbindungen, insbesondere 2- oder 3-funktionelle Verbindungen mit aktiven Wasserstoffatomen, insbesondere Alkohole, wie Ethylenglykol, Propylenglykol oder Glyzerin handeln. Die größte technische Bedeutung hat hierbei das Glycerin.

In einer Ausführungsform des erfindungsgemäßen Verfahrens handelt es sich hierbei um Wasser.

Bei Polyetheralkoholen können entweder Endprodukt, Vorprodukte mit der gleichen Starterkombination, aber niederem Alkoxilierungsgrad oder Alkoylate mit vom Endprodukt unterschiedlichen Startern oder Starterzusammensetzungen eingesetzt werden. In einer weiteren bevorzugten Ausführungsform des erfindungsgemäßen Verfahrens ist die bei Raumtemperatur flüssige Verbindung ein Amin, insbesondere ein aliphatisches Amin, oder ein Aminoalkohol. Beispiele sind Ethylendiamin, Ethanolamin, Diethanolamin und Mischungen aus aromatischen und aliphatischen Aminen.

In einer Ausführungsform des erfindungsgemäßen Verfahrens handelt es sich bei den als bei Raumtemperatur flüssigen Verbindungen eingesetzten Polyetheralkoholen um ein Zwischen- oder das Endprodukt des erfindungsgemäßen Verfahrens. Dieses kann, insbesondere durch die Entfernung von Wasser oder dem Katalysator, aufgearbeitet sein, es kann sich jedoch auch um das Rohprodukt handeln. Es ist auch möglich, zwei-bis vierfunktionelle Polyetherole mit Molekulargewichten zwischen 200 und 600 g/mol als Co-Starter einzusetzen. Diese Polyetherole können sowohl katalysatorfrei sein als auch Katalysator enthalten. Es kann hier auch ein anderer Katalysator verwendet werden als im eigentlichen kontinuierlichen Verfahren. Es ist daher auch denkbar, einen weiteren Katalysator durch die Verwendung des alkalischen zusätzlichen Polyetherols in die Reaktion einzubringen.

Es ist auch möglich, einen Teil des Fertigprodukts, vor oder nach der Entfernung des Katalysators, als Co-Starter einzusetzen. Mit dieser Produktrückführung wird erreicht, dass der feste Starter in einer größeren Masse an flüssigem Starter dispergiert/suspendiert wird.

Möglich sind auch Mischungen aus mindestens zwei Verbindungen der aufgeführten Gruppen.

Vorzugsweise beträgt das Gewichtsverhältnis von fester Startsubstanz zu der bei Raumtemperatur flüssigen Verbindung in der Paste 1:99 - 99:1, besonders bevorzugt 1:1 - 95:5 und insbesondere 1:1 - 90:10.

Im Falle der Saccharose liegt das Gewichtsverhältnis von fester Startsubstanz zu der bei Raumtemperatur flüssigen Verbindung in der Paste bevorzugt zwischen 90:10 und 1:1.

Die Herstellung der Paste erfolgt durch Vermischen der Einsatzstoffe.

Die Herstellung der Paste erfolgt in einem Scherkraftmischer.

Besonders bevorzugt als Scherkraftmischer ist ein Inline-Mischer, ein Extruder oder ein Batch-Mischer mit Intensiv-Rührorgan. Insbesondere bei der Verwendung von Saccharose als fester Startsubstanz werden bei Verwendung eines Scherkraftmischers die Kanten der Kristalle abgerundet, so dass die abrasive Wirkung der Kristalle stark eingeschränkt wird.

Die durchschnittliche Partikelgröße der bei Raumtemperatur festen Verbindung in der Paste beträgt insbesondere kleiner 2 mm und größer 2 µm und liegt vorzugsweise im Bereich zwischen 2 µm und 1500 µm, bevorzugt zwischen 2-1000 µm und ganz bevorzugt zwischen 2-500 µm. Die Partikelgröße und die Partikelgrößenverteilung (PGV) wurden mittels Laserbeugung bestimmt. Dazu wurde die Paste in Isopropanol aufgeschlämmt und 2 Minuten im Ultraschallbad behandelt. Anschließend wurde ein Teil für die Messung entnommen und in das Analysengerät überführt.

Die bevorzugte Teilchengröße kann dabei durch Mahlen oder Zerkleinern der bei Raumtemperatur festen Startsubstanz, durch Zerkleinern der festen Startsubstanz während der Mischung mit der bei Raumtemperatur flüssigen Substanz oder durch Zerkleinern oder Zermahlen der fest-flüssig-Mischung erfolgen

Die Konsistenz der Paste sollte so beschaffen sein, dass sie einerseits pumpfähig ist und andererseits beim Eindosieren in den Reaktor einen gasdichten Abschluss gewährleistet.

Die Zuführung der Paste in das kontinuierlich oder halbkontinuierlich arbeitende Reaktionsgefäß erfolgt durch Förderung mittels einer Pumpe gegen den Druck. Die Pumpe ist z.B. eine zwangsfördernde Pumpe wie eine Exzenterschneckenpumpe, Kolbenpumpe, Wendelkolbenpumpe oder eine Schraubenspindelpumpe. Prinzipiell kann die Druckerhöhung zur Förderung in das Reaktionsgefäß aber auch durch jede andere geeignete Apparatur, z.B. einen Extruder, gewährleistet werden.

Die Zuführung der Paste in das Reaktionsgefäß kann gegen den Druck auch mit einem Gas befördert werden. Hierfür kommen beispielsweise Edelgase, Stickstoff oder Gemische daraus zum Einsatz.

Prinzipiell kann die Paste in kontinuierlichen und in halbkontinuierlichen Semibatch-Verfahren zur Herstellung von Polyetheralkoholen eingesetzt werden. In beiden Fällen wird die Paste wie oben beschrieben dem Reaktor zugeführt.

In einer bevorzugten Ausführungsform der Erfindung wird die Paste bei Semibatch-Verfahren eingesetzt. Die Dosierung der Paste erfolgt dabei parallel zur Alkylenoxiddosierung.

In einer Ausführungsform wird dabei Produkt oder Zwischenprodukt in dem Reaktionsgefäß so vorgelegt, dass von Beginn an eine Durchmischung der Reaktionsmischung gewährleistet wird. Dieses Durchmischen kann dabei durch Rühren oder durch Umpumpen, gegebenenfalls durch einen externen Wärmekreislauf oder eine Kombination beider Aggregate erfolgen.

Die Zuführung der Paste kann dabei entweder über den Reaktordeckel, über den Reaktorboden, ein Tauchrohr oder auch durch Zugabe in den externen Kreislauf erfolgen.

In einer bevorzugten Variante werden die Dosierraten von Paste und Alkylenoxid derart gewählt, dass die Dosierung der Paste bereits nach der Zugabe von 70-95°C des Alkylenoxids beendet ist, um eine Abreaktion der festen Startersubstanz auf Werte unter 1 %, besonders bevorzugt unter 0,5% und ganz besonders bevorzugt unter 500 ppm zu gewährleisten.

Bei halbkontinuierlichen Verfahren kann bei Einsatz der Paste eine schnellere Dosierung der Alkylenoxide erfolgen.

In einer weiteren bevorzugten Ausführungsform wird die Paste, wie beschrieben, zur kontinuierlichen Herstellung von Polyetheralkoholen eingesetzt.

Die Zuführung der Einsatzprodukte des erfindungsgemäßen kontinuierlichen Verfahrens, also der in Pastenform vorliegenden Startsubstanzmischung und der Alkylenoxide, in den Reaktor erfolgt kontinuierlich. Ebenso wird der Katalysator und gegebenenfalls weitere Startsubstanz kontinuierlich in den Reaktor dosiert. Der Katalysator kann auch der Paste zugemischt und in dieser Form dem Reaktor zugeführt werden.

Auch die Entnahme des Reaktionsprodukts aus dem Reaktor erfolgt kontinuierlich in dem Maß wie die Edukte zugegeben werden. Das Ausschleusen des Fertigprodukts kann entweder direkt aus dem Reaktor oder über einen seitlichen Umpumpkreis erfolgen.

Das erfindungsgemäße Verfahren kann in allen kontinuierlich arbeitenden Reaktoren erfolgen. Bevorzugt sind Rohrreaktoren, Schlaufen-oder Kreislaufreaktoren, Strahlschlaufenreaktoren mit einem innenliegenden Wärmetauscher, wie beispielsweise in DE 19854637 oder in DE 10008630 beschrieben, oder Strahlschlaufenreaktoren mit einem außenliegendem Wärmetauscher, wie beispielsweise in EP 419 419 beschrieben, und kontinuierlich arbeitende Rührkessel (CSTR) und aufgeführte Reaktoren, die in Reihe geschaltet sind (Kaskade).

Vorzugsweise werden rückvermischte Reaktoren, also z.B. Strahlschlaufenreaktoren und insbesondere kontinuierlich arbeitende Rührkessel, eingesetzt.

Bei der Verwendung der kontinuierlich arbeitenden rückvermischten Reaktoren, insbesondere der Rührkessel, können diese sowohl einzeln als auch als Kaskade angeordnet ein. Dabei besteht die Rührkesselkaskade bevorzugt aus mindestens zwei und höchstens fünf Kesseln. Dabei kann in allen Kesseln der Kaskade die Dosierung der Edukte erfolgen.

Die Reaktorgröße richtet sich nach der notwendigen Verweilzeit und kann vom Fachmann wie üblich ermittelt werden. Sie ist vorzugsweise mindestens so zu wählen, dass der gewünschte Alkoxylierungsgrad erreicht wird, und eine ausreichende Wärmeabfuhr erfolgen kann.

Die Wärmeabfuhr bei der exothermen Alkoxylierung kann über einen externen oder internen Wärmetauscher erfolgen, wobei externe Wärmetauscher bevorzugt sind. Um zu vermeiden, dass Restzucker in die weiteren Prozessschritte transportiert wird, kann das Produkt vor dem Eintritt in die Transferleitung oder in der Transferleitung aber vor dem Eintritt in den nächsten Reaktor einer Fest-Flüssig-Trennung unterworfen werden. Die Fest-Flüssig-Trennung kann eine Filtration, eine Querstromfiltration oder eine auch eine Schwerkraftsabtrennung z.B. durch einen Hydrocyclon sein. Der zuckerhaltige Strom wird wieder in den Reaktor zurückgeführt, während der zuckerfreie Produktstrom in den weiteren Verfahrensschritt geleitet wird.

In einer Ausführungsform des erfindungsgemäßen Verfahrens wird der fertige Polyetheralkohol dem rückvermischten Reaktor entnommen.

In einer anderen Ausführungsform des erfindungsgemäßen Verfahrens schließt sich an den kontinuierlichen rückvermischten Reaktor oder die Kaskade ein weiterer kontinuierlicher Reaktor an.

Als Katalysatoren werden üblicherweise basische Verbindungen eingesetzt. Dabei handelt es sich üblicherweise um tertiäre Amine, Alkanolamine, Aminen, die unter Reaktionsbedingungen mit Alkylenoxiden zu Alkanloaminen reagieren und/oder Hydroxide von Alkali- und Erdalkalimetallen. Beispiele für aminische Katalysatoren sind Diemethylamin, Trimethylamin (TMA), Tributylamin, Triethylamin (TEA), Dimethylethanolamin (DMEOA) und Dimethylcyclohexylamin (DMCHA), Imidazol und substituierte imidazolderivate, vorzugsweise Dimethylethanolamin. Beispiele für die Hydroxide sind Kaliumhydroxid, Natriumhydroxid, Strontiumhydroxid und Kalziumhydroxid. In einer Ausführungsform des erfindungsgemäßen Verfahrens wird als Katalysator eine Mischung aus einem gegebenenfalls substituiertem Alkanolamin, insbesondere DMEOA, und einem Erdalkalimetallhydroxid eingesetzt

Die genannten Katalysatoren können einzeln oder im Gemisch miteinander eingesetzt werden. Es ist möglich, im kontinuierlichen rückvermischten Reaktor und im weiteren Reaktor die gleichen oder unterschiedliche Katalysatoren zu verwenden.

Die Katalysatorkonzentration kann, bezogen auf die Gesamtmasse des Polyols, zwischen 0,01 und 10 % liegen. Falls leichtflüchtige Amine wie TMA oder TEA verwendet werden, ist es zudem möglich, diese aus dem Endprodukt mittels Strippen oder Destillation abzutrennen und erneut zu verwenden. Das Strippen kann vorzugsweise nach dem rückvermischten Reaktor erfolgen. Der so gewonnene Aminkatalysator kann wieder in den kontinuierlich betriebenen rückvermischten Reaktor zurückgeführt werden.

Der nach dem rückvermischten Reaktor abgestrippte Aminkatalysator kann auch nicht wieder in den kontinuierlich betriebenen rückvermischten Reaktor zurückgeführt, sondem über einen geeigneten Apparat vom Reaktionsmedium absorbiert werden.

Auch nicht umgesetztes Alkylenoxid kann nach dem rückvermischten Reaktor abgestrippt und wieder in einen vorhergehenden Reaktor zugeführt oder über einen geeigneten Apparat vom Reaktionsmedium absorbiert werden.

Es ist bevorzugt, aminische Katalysatoren allein oder in Kombination mit den metallischen Katalysatoren zu verwenden. Der Vorteil der Verwendung von Aminen besteht darin, dass eine Abtrennung des Katalysators aus dem Produkt unterbleiben kann.

Der fertige Polyetheralkohol wird wie üblich neutralisiert, beispielsweise durch Mineralsäuren und oder Carbonsäuren, und/oder durch z.B. Kristallisation, Ionentausch oder Adsorption aufgearbeitet. Dieser Schritt kann entfallen, wenn nur aminische Katalysatoren eingesetzt werden. Es ist darüber hinaus auch möglich, statt einer ganzen oder teilweisen Entfernung des Katalysators lediglich eine Neutralisation mittels organischen Säuren wie Essigsäure, Milchsäure, Citronensäure, 2-Ethylhexansäure, oder mineralischen Säuren durchzuführen. Dabei können auch Gemische aus Essigsäure, Milchsäure, Citronensäure, 2-Ethylhexansäure eingesetzt werden.

So kann es notwendig sein, Reste von Alkylenoxiden durch Strippen in Kolonnen, Blasensäulen oder Verdampfern, wie Dünnschichtverdampfern oder Fallfilmverdampfern zu entfernen. Gleichzeitig können eventuell vorhandene flüchtige Katalysatoren, insbesondere Amine, entfernt werden.

Die am Ende der Reaktionskaskade oder zwischen zwei Reaktoren innerhalb der Kaskade entfernten Alkylenoxide und/oder flüchtigen Katalysatoren können entweder verworfen oder wieder als Edukte eingesetzt werden. Dabei ist es einerseits möglich, die Stoffe nach Kondensation als Flüssigkeiten zuzuführen. Andererseits können die gasförmigen Reaktionskomponenten auch unter Verwendung eines geeigneten Absorbers, beispielsweise einer Absorberkolonne, in das Reaktionsgemisch eingebracht werden. Die Einleitung des zurückgeführten Alkylenoxids und/oder Katalysators kann bei einer Kaskade sowohl am Anfang der Reaktorkaskade als auch zwischen zwei Reaktoren erfolgen. Als Absorbens kann die Startermischung oder Teile davon eingesetzt werden.

Die je nach Anwendung notwendige Entfernung der Katalysatoren auf Alkali- bzw. Erdalkalimetallbasis kann durch klassische Methoden erfolgen, beispielsweise Kristallisation, Ionentausch oder Adsorption. In diesem Fall werden Produkte angestrebt, die < 200 ppm Alkalität, bevorzugt < 100 ppm, enthalten. Bevorzugt sollten solche Verfahren kontinuierlich betrieben werden.

Eine Stabilisierung der Produkte durch Antioxidantien kann erfolgen, wenn dies, beispielsweise aus Gründen der Anwendung oder der Lagerstabilität, erforderlich ist.

Das erfindungsgemäße Verfahren wird, wie üblich, bei Temperaturen zwischen 50 und 180 °C durchgeführt. Der Druck während der Reaktion im CSTR-Kessel bzw. in den CSTR-Kesseln liegt bei 1-40 barg, und die Alkylenoxid-Konzentration unter 20 Gew.-%, bevorzugt unter 10 Gew.-%, jeweils bezogen auf das Gewicht sämtlicher im Reaktor befindlichen Produkte. Der Druck im Rohrreaktor ist so zu wählen, dass die Alkylenoxide größtenteils, möglichst aber vollständig flüssig bleiben. Unter bestimmten Umständen, beispielsweise bei Verwendung von senkrechten Rohrreaktoren, könnte jedoch eine Gasphase vorliegen.

Das Anfahren des kontinuierlichen Verfahrens erfolgt beispielsweise durch Vorlage des Fertigprodukts, das aus dem kontinuierlichen oder einem Semibatch-Verfahren erhalten wird. Nach Zugabe des Katalysators erfolgt die kontinuierliche Dosierung der Starter-Paste und des Katalysators sowie des Alkylenoxids. Bei hohen Feststoffgehalten der Paste kann es erforderlich sein, das Anfahren mit einer Paste mit niedrigerem Feststoffgehalt durchzuführen als es der Produktstöchiometrie entspricht. Innerhalb kurzer Zeit kann das Verhältnis in der Starter-Paste zu immer höheren Feststoffanteilen verschoben werden.

Wie beschrieben, schließt sich in einer anderen Ausführungsform des erfindungsgemäßen Verfahrens an den kontinuierlichen Reaktor ein weiterer kontinuierlicher Reaktor an. Dabei kann es sich ebenfalls um einen rückvermischten Reaktor, vorzugsweise jedoch um einen Rohrreaktor handeln. Dieser wird im Folgenden auch als Nachreaktor bezeichnet.

In einer Ausführungsform dient dieser Nachreaktor der vollständigen Umsetzung des im Austrag aus dem kontinuierlichen rückvermischten Reaktor noch vorhandenen Alkylenoxids. In dieser Ausführungsform wird in den Nachreaktor kein Alkylenoxid dosiert. Falls erforderlich, kann dem Reaktionsgemisch vor oder während der Reaktion im Nachreaktor weiterer Katalysator zugesetzt werden. Dabei kann es sich um den gleichen oder einen anderen Katalysator handeln wie im kontinuierlichen rückvermischten Reaktor.

In einer weiteren Ausführungsform werden als Nachreaktor ein oder mehrere rückvermischte Reaktoren dem eigentlichen Alkoxylierreaktor nachgeschaltet, die mit internen oder externen Wärmetauschern versehen sind, um die bei der Nachreaktion entstehende Wärme besser abzuführen. Auch in dieser Ausführungsform können in einen oder mehrere Nachreaktoren Katalysator nachdosiert werden Auch Kombinationen von Rührkesselkaskaden und Rohrreaktoren zur Abreaktion von Alkylenoxid sind möglich.

Es ist auch möglich, den Nachreaktor so auszulegen, dass der feste Starter vollständig umgesetzt wird und kein Gehalt an festem Starter mehr im Produkt verbleibt. Über schüssig vorhandenes Alkylenoxid kann dann abgestrippt werden.

In einer weiteren Ausführungsform des erfindungsgemäßen Verfahrens wird im Nachreaktor ein weiterer Molgewichtsaufbau des Produkts aus dem kontinuierlichen Reaktor vorgenommen. Dazu wird in den Nachreaktor gegebenenfalls weiteres Alkylenoxid und gegebenenfalls weitere Startsubstanz, insbesondere flüssige Startsubstanz, wobei es sich um Alkohole, Amine oder deren Alkoxylate handeln kann, dosiert. Die Dosierung kann dabei im Falle eines Rohrreaktors unmittelbar am Eingang des Nachreaktors und/oder an mindestens einer Dosierstelle im Verlaufe des Rohrreaktors erfolgen.

Der vorzugsweise als Nachreaktor eingesetzte Rohrreaktor kann auf verschiedene Arten ausgeführt werden. So ist es möglich, ein leeres Rohr zu verwenden. Vorzugsweise kann das Rohr mit Einbauten, z.B. mit Füllkörpern, statischen Mischern mit und ohne internen Wärmetauscherflächen und/oder Einbauten, die zur Ausbildung einer Pfropfenströmung führen, z.B. kommerziell erhältlichen SMX, SMR-Typen der Firma Sulzer, oder als Wendelrohrreaktor ausgeführt sein. Die Wärmeabfuhr kann über den Mantel, eine innenliegende Kühlschlange im Rohrreaktor oder durch Zwischenkühlung mit Hilfe von eingesteckten oder zwischen Rohrabschnitten vorgesehenen Wärmetauschern erfolgen. An einer oder mehrerer Stellen des Rohrreaktors können, wie beschrieben, Dosierstellen für Starter, Alkylenoxide und Katalysatoren installiert werden. Es ist auch möglich, den Reaktor ohne zusätzliche Dosierstellen zu betreiben. In dieser Ausführungsform wird das für die Umsetzung im weiteren Reaktor notwendige Alkylenoxid der Reaktionsmischung vor Eintritt in diesen Reaktor zugesetzt.

Die Verweilzeiten in den weiteren Reaktoren richten sich entweder nach der Forderung, nach dem Reaktor eine Konzentration an freiem Alkylenoxid unterhalb von 10 %, bevorzugt unter 5 % und ganz bevorzugt unterhalb 1 %, zu erhalten. Andererseits kann der Nachreaktor so ausgelegt werden, dass der Restgehalt an festem Starter minimiert. vorzugsweise auf einen Restgehalt kleiner 0,5 Gew.%, wird. Die Fließgeschwindigkeiten in den Rohrreaktoren sind so zu wählen, dass eine radiale Vermischung des Reaktionsmediums erreicht wird, was keine oder nur geringe radiale Temperatur- und Konzentrationsgradienten zur Folge hat. Dies kann über ein turbulentes Strömungsprofil, Einbauten wie Füllkörper oder statische Mischer oder ein gewendeltes Rohr erreicht werden.

Die Reaktionstemperaturen sind, wie im kontinuierlichen Reaktor, so zu wählen, dass einerseits eine hohe Reaktionsgeschwindigkeit erreicht werden kann und andererseits eine Schädigung des Produkts unterbleibt.

Die Konzentrationen an freien Alkylenoxiden sind an den Einspeisungsstellen so zu wählen, dass die Wärmeabfuhr in Folge der Reaktion gesichert ist.

Eine denkbare Ausführungsform wäre ein Rohrreaktor, der durch verschlossene Böden in voneinander getrennte Abschnitte, sogenannte Kompartments, unterteilt ist, die durch externe Rohrleitungen miteinander verbunden sind, in dem der Austrag des Reaktors vom ersten Schritt der Reaktion die Kompartments nacheinander durchläuft. In diesen Reaktor wird kein Alkylenoxid dosiert. Ein solcher Reaktor ist beispielsweise in WO 2007/009905 beschrieben.

Für den Fall, dass das Produkt nicht neutralisiert wird, ist den Reaktoren eine Strippeinheit nachgeschaltet. Diese Strippeinheit kann als Kolonne, als Blasensäule oder als Rührbehälter ausgeführt sein. Dabei wird unter vermindertem Druck, bevorzugt kleiner 200 mbar, ganz besonders bevorzugt kleiner als 50 mbar nicht abreagiertes Alkylenoxid aus dem Produkt entfernt. Dieser Prozess wird gefördert unter Verwendung eines Strippgases wie z.B. Stickstoff oder Dampf. Wird Dampf als Strippgas verwendet, ist der Druck und die Dampfmenge so einzustellen, dass neben den gewünschten Restalkylenoxid-Werten auch die anzustrebenden Wassergehalte im Produkt eingehalten werden. Gegebenenfalls kann in einem separaten Reaktionsschritt unter Vakuum das Restwasser entfernt werden.

Zur Herstellung der Polyetheralkohole können Verbindungen mit mindestens einer Epoxygruppe, wie zum Beispiel Ethylenoxid, 1,2-Epoxypropan (Propylenoxid), 1,2- und 2,3-Epoxybutan (Butylenoxid) sowie höhere homologe 1,2-Epoxyalkane bzw. 1,2-Epoxycycloalkane, Styroloxid etc., oder beliebige Mischungen hieraus, eingesetzt werden. Besonders bevorzugt sind Ethylenoxid und Propylenoxid und deren Mischungen, insbesondere Propylenoxid.

Durch das erfindungsgemäße Verfahren können auf einfache und effektive Weise Polyetheralkohole nach einem kontinuierlichen Verfahren hergestellt werden, ohne dass Probleme bei der Dosierung der festen Startsubstanzen auftreten. Die Gehalte an nicht umgesetzten Startermolekülen, insbesondere der festen Starter, ist gering, im Regelfall unterhalb von 1 Gew.%, besonders bevorzugt unterhalb von 0,5 Gew.-% und insbesondere unterhalb von 0,1 Gew.-%.

Die nach dem erfindungsgemäßen Verfahren hergestellten Polyetheralkohole haben vorzugsweise ein Molekulargewicht im Bereich 200-2000 g/mol, insbesondere 200-1000 g/mol.

Die Erfindung soll an den nachfolgenden Beispielen näher erläutert werden.

### Beispiel 1

Kontinuierliche Herstellung einer Paste aus Saccharose und Glycerin
In einem Inline-Scherkraftmischer der Firma Lipp wurde eine Paste aus Saccharose und Glycerin im Verhältnis 80:20 hergestellt, in dem die Einsatzstoffe dem Mischer kontinuierlich zugeführt wurden. Die erhaltene Paste wurde mittels einer Exzenterschneckenpumpe kontinuierlich in ein Reaktionsgefäß, das unter Druck (15 bar) stand, abgeführt. Die Partikelgrößenverteilung (PGV) wurde mittels Laserbeugung bestimmt. Dazu wurde die Paste in Isopropanol aufgeschlämmt und 2 Minuten im Ultraschallbad behandelt. Anschließend wurde ein Teil für die Messung entnommen und in das Analysengerät überführt. Die PGV zeigte ein Spektrum von 1- 1000 µm und dem Maximum der Verteilungskurve der Partikelgröße um 20-50 µm. Der Kristallzucker wies vor der Verarbeitung zur Paste eine PGV von 10-2000 µm auf.

### Beispiel 2

Kontinuierliche Umsetzung einer Saccharose/Glycerin-Mischung mit Alkylenoxiden

Eine Mischung aus Saccharose und Glycerin im Verhältnis 80:20 wurde in einem gegenläufigen Extruder hergestellt und mittels einer Kolbenpumpe in einen hydraulisch gefüllten kontinuierlichen Rührkessel mit Umwälzkreislauf (2,8l) überführt. Das Reaktionsgefäß verfügte über einen Rührer.

Die Temperaturregelung und -kontrolle erfolgte über ein innenliegendes Thermoelement. In das Reaktionsgefäß (CSTR) wurden ebenfalls kontinuierlich Dimethylethanolamin als Katalysator (0,75 Gew.-%, bezogen auf Gesamtmenge der Eingangsstoffe) sowie Propylenoxid mittels HPLC-Pumpen gegeben. Der Gesamtstoffstrom betrug 918 g/h. Ein Teil dieser Mischung wurde kontinuierlich einem Nachreaktor, einem Rohrreaktor mit einem Volumen von 1,1 L, zugeführt, um noch vorhandenes Propylenoxid abreagieren zu lassen. Nicht umgesetztes Propylenoxid wurde kontinuierlich in einem nachgeschalteten Stripp-Behälter unter Vakuum (50 mbar) entfernt. Die Umsetzungstemperatur betrug 110°C sowohl im CSTR als auch im Nachreaktor. Das Produkt wurde nicht aufgearbeitet. Das Reaktionsprodukt, das im stationären Betrieb (nach 5 Verweilzeiten) erhalten wurde, wurde analysiert. Im CSTR wurde eine Propylenoxid-Konzentration von 5 % mittels ATR-IR-Sonde detektiert. Die OH-Zahl des erhaltenen Produkts lag bei 468 mg KOH/g und die Viskosität bei 22500 mPas bei 25°C. Der Gehalt an Restzucker wurde bestimmt, in dem das Produkt silyliert und anschließend mittels Gaschromatographie analysiert wurde. Es konnte kein Restzucker nachgewiesen werden Das Produkt wurde auf Verschäumbarkeit analysiert und zeigte nahezu identische Eigenschaften wie das entsprechend hergestellte Semibatch-Produkt.

### Beispiel 3

Kontinuierliche Alkoxylierung einer Saccharose/Glycerin/Polyol-Mischung:

Eine Mischung aus Saccharose, Glycerin und dem Polyetherol aus Beispiel 2 im Gewichts-Verhältnis Saccharose:Glyzerin:Polyetherol von 60:20:20 wurde kontinuierlich in einem gegenläufigen Extruder zu einer Paste vermengt und mittels einer Kolbenpumpe in einen kontinuierlichen Rührkessel nach Beispiel 2 überführt. Die weitere Reaktionsdurchführung blieb identisch und das Reaktionsprodukt aus dem stationären Betrieb zeigte vergleichbare Analylikdaten im Vergleich zu Beispiel 1: OHZ = 485, Viskosität: 25200 mPas bei 25°C und Restzuckergehalt von 200 ppm. Darüber hinaus konnte ein Teil des erhaltenen Fertigprodukts aus der kontinuierlichen Reaktionsführung der Startermischung zugeführt werden.

### Beispiel 4

Kontinuierliche Alkoxylierung einer Saccharose/Glycerin-Mischung

Eine Mischung aus Saccharose und Glycerin im Verhältnis 80:20 wurde wie in Beispiel 1 beschrieben kontinuierlich in einem gegenläufigen Extruder zu einer Paste vermengt und mittels einer Kolbenpumpe in einen kontinuierlichen Rührkessel nach Beispiel 2 überführt. In das Reaktionsgefäß (CSTR) wurden ebenfalls kontinuierlich DMEOA als Katalysator (0,75 Gew.-% bezogen auf Gesamtmenge der Einsatzstoffe) sowie Propylenoxid mittels HPLC-Pumpen gegeben. Der Gesamtstoffstrom betrug 1378 g/h. Ein Teil dieser Mischung wurde kontinuierlich einem zweiten Reaktionsgefäß, einem CSTR mit einem Volumen von 1,4 L, zugeführt. Anschließend wurde das Reaktionsgemisch dem Nachreaktor (1,1 L) zugeführt, um noch vorhandenes Propylenoxid abreagieren zu lassen. Nicht umgesetztes Propylenoxid wurde kontinuierlich im Stripping-Behälter entfernt. Die Umsetzungstemperatur betrug sowohl in den CSTRs als auch im Nachreaktor110°C. Am Ausgang des Nachreaktors war ein Druckhalteventil positioniert, das den Reaktorinhalt kontinuierlich in die unter Vakuum stehende Produktvorlage (ca. 50 mbar) entließ. Das Produkt wurde nicht aufgearbeitet. Es wurde das Reaktionsprodukt analysiert, das im stationären Betrieb (nach ca. 5 Verweilzeiten) erhalten wurde. Im ersten CSTR wurde eine Propylenoxid-Konzentration von 8,3 % und im zweiten CSTR von 1,3 % mittels ATR-IR-Sonde detektiert. Die OH-Zahl des erhaltenen Produkts lag bei 455 mg KOH/g und die Viskosität bei 20150 mPas bei 25°C. Der Gehalt an Restzucker wurde bestimmt, in dem das Produkt silyliert und anschließend mittels Gaschromatographie analysiert wurde. Es konnte kein Restzucker nachgewiesen werden. Das Produkt wurde auf Verschäumbarkeit analysiert und zeigte nahezu identische Eigenschaften wie das entsprechend hergestellte Semibatch-Produkt.

Die Bestimmung der Hydroxylzahl erfolgte nach DIN 53420 und die Bestimmung der Viskosität erfolgte nach DIN 53019.

Zur Bestimmung des Restzuckers wurden 200 mg des Polyetheralkohols mit 200 Mikroliter einer Lösung aus 2 mg 1-Dodecanol in 1 ml Pyridin gelöst und danach mit 600 Mirolitern N-Methyl-N-trimethylsilyltrifluoracetamid (MSTFA) versetzt. Nach der Zugabe des MSTFA wurde die Probe 2 Stunden bei 70 bis 80 °C im Wärmeschrank temperiert. Die auf Raumtemperatur abgekühlte Probe wurde in den Gaschromatographen injiziert.

## Patentansprüche

1. Verfahren zur Herstellung von Polyetheralkoholen durch Anlagerung von Alkylenoxiden an H-funktionelle Startsubstanzen, von denen mindestens eine bei Raumtemperatur fest ist, in einem Reaktionsgefäß, wobei die Ausgangskomponenten dem Reaktionsgefäß kontinuierlich zugeführt werden, **dadurch gekennzeichnet, dass** aus der festen Startsubstanz eine Paste hergestellt und diese Paste dem Reaktionsgefäß kontinuierlich zugeführt wird, wobei als Paste Gemische aus bei Raumtemperatur festen Verbindungen mit bei Raumtemperatur flüssigen Verbindungen gelten, die jeweils mit Alkylenoxiden reaktive Wasserstoffatome enthalten, wobei die bei Raumtemperatur festen Verbindungen dabei in Form von Partikeln mit einer durchschnittlichen Partikelgröße von kleiner 2 mm vorliegen, wobei diese Gemische pumpfähig sind, wobei unter pumpfähig verstanden wird, dass die Viskosität der Paste bei maximal 100000 mPa.s liegt, und wobei die Bestimmung der Viskosität nach DIN 53019 erfolgt und die Partikelgröße und die Partikelgrößenverteilung (PGV) mittels Laserbeugung bestimmt wird, wozu die Paste in Isopropanol aufgeschlämmt und 2 Minuten im Ultraschallbad behandelt wird und anschließend ein Teil für die Messung entnommen und in das Analysengerät überführt wird, **dadurch gekennzeichnet, dass** die Paste durch Vermischung der festen Startsubstanz mit der bei Raumtemperatur flüssigen Verbindung in einem Scherkraftmischer hergestellt wird.

2. Verfahren nach Anspruch 1, **dadurch gekennzeichnet, dass** das Verfahren in einem rückvermischten Reaktor durchgeführt wird.

3. Verfahren nach Anspruch 1, **dadurch gekennzeichnet, dass** das Verfahren kontinuierlich durchgeführt wird.

4. Verfähren nach Anspruch 1, **dadurch gekennzeichnet, dass** das Verfahren halbkontinuierlich durchgeführt wird.

5. Verfahren nach Anspruch 1, **dadurch gekennzeichnet, dass** der rückvermischte Reaktor ein Rührkesselreaktor ist.

6. Verfahren nach Anspruch 1, **dadurch gekennzeichnet, dass** der rückvermischte Reaktor eine Rührkesselkaskade ist.

7. Verfahren nach Anspruch 1, **dadurch gekennzeichnet, dass** der rückvermischte Reaktor ein Strahlschlaufenreaktor ist.

8. Verfahren nach Anspruch 3, **dadurch gekennzeichnet, dass** der Reaktor ein Rohrreaktor ist.

9. Verfahren nach Anspruch 3, **dadurch gekennzeichnet, dass** sich an den kontinuierlich betriebenen rückvermischten Reaktor ein weiterer kontinuierlicher Reaktor anschließt.

10. Verfahren nach Anspruch 8 **dadurch gekennzeichnet, dass** es sich bei dem weiteren kontinuierlichen Reaktor um einen Reaktor mit Pfropfenströmung handelt.

11. Verfahren nach Anspruch 7 **dadurch gekennzeichnet, dass** es sich bei dem weiteren kontinuierlichen Reaktor um einen Rohreaktor handelt.

12. Verfahren nach Anspruch 1, **dadurch gekennzeichnet, dass** die als feste Startsubstanz eingesetzte Verbindung eine Funktionalität von mindestens 4 aufweist.

13. Verfahren nach Anspruch 1, **dadurch gekennzeichnet, dass** als feste Startsubstanz Kohlenhydrate eingesetzt werden.

14. Verfahren nach Anspruch 1, **dadurch gekennzeichnet, dass** die Kohlenhydrate ausgewählt sind aus der Gruppe, enthaltend Pentaerithrit, Sorbit, Saccharose, Cellulose, Stärke, Stärkehydrolysate.

15. Verfahren nach Anspruch 1, **dadurch gekennzeichnet, dass** als feste Startsubstanz mindestens ein Stickstoffatom enthaltende Verbindungen eingesetzt werden.

16. Verfahren nach Anspruch 14, **dadurch gekennzeichnet, dass** die als feste Startsubstanz eingesetzte mindestens ein Stickstoffatom enthaltende Verbindung ausgewählt ist aus der Gruppe, enthaltend Toluylendiamin, Diphenylmethandiamin, Harnstoff, Melamin und dessen H-funktionelle Derivate sowie Umsetzungsprodukte von Aminen mit Isocyanaten.

17. Verfahren nach Anspruch 1, **dadurch gekennzeichnet, dass** die Paste durch Mischung der festen Startsubstanz mit einer bei Raumtemperatur flüssigen Verbindung hergestellt wird.

18. Verfahren nach Anspruch 16, **dadurch gekennzeichnet, dass** die bei Raumtemperatur flüssige Verbindung Wasser ist.

19. Verfahren nach Anspruch 16, **dadurch gekennzeichnet, dass** die bei Raumtemperatur flüssige Verbindung ein Alkohol ist.

20. Verfahren nach Anspruch 18, **dadurch gekennzeichnet, dass** der Alkohol ausgewählt ist aus der Gruppe, enthaltend Glycerin, Ethylenglykol, Diethylenglykol, Propylenglykol, Butandiol oder ein Polyetheralkohol ist.

21. Verfahren nach Anspruch 16, **dadurch gekennzeichnet, dass** die bei Raumtemperatur flüssige Verbindung ein Amin ist.

## Claims

1. A process for preparing polyether alcohols by adding alkylene oxides onto H-functional starter substances, of which at least one is solid at room temperature in a reaction vessel, by feeding the starting components continuously to the reaction vessel, which comprises preparing a paste from the solid starter substance and feeding this paste continuously to the reaction vessel, "pastes" being considered to be mixtures of compounds which are solid at room temperature with compounds which are liquid at room temperature, each of which comprise hydrogen atoms reactive with alkylene oxides, the compounds which are solid at room temperature being in the form of particles with an average particle size of less than 2 mm, and these mixtures being pumpable, "pumpable" being understood to mean that the viscosity of the paste is not more than 100 000 mPa.s, and the viscosity being determined to DIN 53019 and the particle size and the particle size distribution (PSD) being determined by means of laser diffraction, for which purpose the paste is slurried in isopropanol and treated in an ultrasound bath for 2 minutes, and then a portion is taken for the measurement and transferred into the analysis instrument, wherein the paste is produced by mixing the solid starter substance with the compound which is liquid at room temperature in a shear force mixer.

2. The process according to claim 1, which is performed in a backmixed reactor.

3. The process according to claim 1, which is performed continuously.

4. The process according to claim 1, which is performed semicontinuously.

5. The process according to claim 1, wherein the backmixed reactor is a stirred tank reactor.

6. The process according to claim 1, wherein the backmixed reactor is a stirred tank battery.

7. The process according to claim 1, wherein the backmixed reactor is a jet loop reactor.

8. The process according to claim 3, wherein the reactor is a tubular reactor.

9. The process according to claim 3, wherein the continuous backmixed reactor is followed downstream by a further continuous reactor.

10. The process according to claim 8, wherein the further continuous reactor is a reactor with plug flow.

11. The process according to claim 7, wherein the further continuous reactor is a tubular reactor.

12. The process according to claim 1, wherein the compound used as the solid starter substance has a functionality of at least 4.

13. The process according to claim 1, wherein the solid starter substance used comprises carbohydrates.

14. The process according to claim 1, wherein the carbohydrates are selected from the group comprising pentaerythritol, sorbitol, sucrose, cellulose, starch, starch hydrolyzates.

15. The process according to claim 1, wherein the solid starter substance used comprises compounds comprising at least one nitrogen atom.

16. The process according to claim 14, wherein the compound which comprises at least one nitrogen atom and is used as the solid starter substance is selected from the group comprising tolylenediamine, diphenylmethanediamine, urea, melamine and H-functional derivatives thereof, and also reaction products of amines with isocyanates.

17. The process according to claim 1, wherein the paste is prepared by mixing the solid starter substance with a compound liquid at room temperature.

18. The process according to claim 16, wherein the compound liquid at room temperature is water.

19. The process according to claim 16, wherein the compound liquid at room temperature is an alcohol.

20. The process according to claim 18, wherein the alcohol is selected from the group comprising glycerol, ethylene glycol, diethylene glycol, propylene glycol, butanediol or a polyether alcohol.

21. The process according to claim 16, wherein the compound liquid at room temperature is an amine.

## Revendications

1. Procédé pour la production de polyétheralcools par fixation par addition d'oxydes d'alkylène sur des substances de départ à fonction H, dont au moins une est solide à la température ambiante, dans un récipient de réaction, les composants de départ étant envoyés en continu au récipient de réaction, **caractérisé en ce qu'**une pâte est produite à partir de la substance solide de départ, et cette pâte est envoyée en continu au récipient de réaction, en tant que pâte étant utilisés des mélanges de composés solides à la température ambiante avec des composés liquides à la température ambiante, qui contiennent chacun des atomes d'hydrogène réactifs avec des oxydes d'alkylène, les composés solides à la température ambiante se trouvant en ce cas sous forme de particules ayant une taille moyenne de particule inférieure à 2 mm, ces mélanges étant aptes à être pompés, en entendant par « aptes à être pompés » que la viscosité de la pâte est au maximum de 100 000 mPa.s, et la détermination de la viscosité s'effectuant selon DIN 53019 et la taille de particule et la distribution de tailles de particules (DTP) étant déterminées par diffraction laser, pour laquelle on met la pâte en suspension dans de l'isopropanol et on la traite pendant 2 minutes en bain ultrasonique et ensuite on en prélève une partie pour la mesure et on transfère cette dernière dans l'appareil d'analyse, **caractérisé en ce qu'**on prépare la pâte par mélange de la substance solide de départ avec le composé liquide à la température ambiante, dans un mélangeur à forces de cisaillement.

2. Procédé selon la revendication 1, **caractérisé en ce que** le procédé est effectué en continu dans un réacteur à rétromélangeage.

3. Procédé selon la revendication 1, **caractérisé en ce que** le procédé est effectué en continu.

4. Procédé selon la revendication 1, **caractérisé en ce que** le procédé est effectué en mode semi-continu.

5. Procédé selon la revendication 1, **caractérisé en ce que** le réacteur à rétromélangeage est un réacteur de type cuve à agitation.

6. Procédé selon la revendication 1, **caractérisé en ce que** le réacteur à rétromélangeage est une cascade de cuves à agitation.

7. Procédé selon la revendication 1, **caractérisé en ce que** le réacteur à rétromélangeage est un réacteur à circulation à jet.

8. Procédé selon la revendication 3, **caractérisé en ce que** le réacteur est un réacteur tubulaire.

9. Procédé selon la revendication 3, **caractérisé en ce qu'**au réacteur à rétromélangeage fonctionnant en continu fait suite un autre réacteur continu.

10. Procédé selon la revendication 8, **caractérisé en ce que** l'autre réacteur continu consiste en un réacteur à écoulement pistou.

11. Procédé selon la revendication 7, **caractérisé en ce que** l'autre réacteur continu consiste en un réacteur tubulaire.

12. Procédé selon la revendication 1, **caractérisé en ce que** le composé utilisé comme substance solide de départ présente une fonctionnalité d'au moins 4.

13. Procédé selon la revendication 1, **caractérisé en ce qu'**on utilise comme substance solide de départ des glucides.

14. Procédé selon la revendication 1, **caractérisé en ce que** les glucides sont choisis dans le groupe contenant le pentaérythritol, le sorbitol, le saccharose, la cellulose, l'amidon, des hydrolysats d'amidon.

15. Procédé selon la revendication 1, **caractérisé en ce qu'**on utilise comme substance solide de départ des composés contenant au moins un atome d'azote.

16. Procédé selon la revendication 14, **caractérisé en ce que** le composé contenant au moins un atome d'azote, utilité comme substance solide de départ, est choisi dans le groupe contenant la toluylènediamine, la diphénylméthanediamine, l'urée, la mélanine et ses dérivés à fonction H ainsi que des produits de réaction d'amines avec des isocyanates.

17. Procédé selon la revendication 1, **caractérisé en ce qu'**on prépare la pâte par mélange de la substance solide de départ avec un composé liquide à la température ambiante.

18. Procédé selon la revendication 16, **caractérisé en ce que** le composé liquide à la température ambiante est l'eau.

19. Procédé selon la revendication 16, **caractérisé en ce que** le composé liquide à la température ambiante est un alcool.

20. Procédé selon la revendication 18, **caractérisé en ce que** l'alcool est choisi dans le groupe contenant le glycérol, l'éthylèneglycol, le diéthylèneglycol, le propylèneglycol, le butanediol ou un polyétheralcool.

21. Procédé selon la revendication 16, **caractérisé en ce que** le composé liquide à la température ambiante est une amine.
